(19) Europäisches Patentamt

European Patent Office

Office européen des brevets

(11) EP 0 852 902 B1

(12) EUROPEAN PATENT SPECIFICATION

(45) Date of publication and mention
of the grant of the patent:
**28.05.2003 Bulletin 2003/22**

(51) Int Cl.[7]: **A01C 15/00**, A01C 17/00,
G01G 23/00, A01B 59/06

(21) Application number: **98200662.9**

(22) Date of filing: **15.10.1992**

(54) **An implement for spreading material**

Streuer

Epandeur

(84) Designated Contracting States:
**DE DK FR GB IT NL**

(30) Priority: **17.10.1991 NL 9101732**

(43) Date of publication of application:
**15.07.1998 Bulletin 1998/29**

(62) Document number(s) of the earlier application(s) in
accordance with Art. 76 EPC:
**92203166.1 / 0 537 857**

(73) Proprietor: **C. van der Lely N.V.**
**3155 PD Maasland (NL)**

(72) Inventors:
- **van den Berg, Karel**
  **2971 BR Bleskensgraaf (NL)**
- **Bom, Cornelis Johannes Gerardus**
  **3181 VC Rozenburg (NL)**
- **van der Waal, Pieter Jacob**
  **3145 LB Maassluis (NL)**

(74) Representative: **Corten, Maurice Jean F.M. et al**
**Octrooibureau Van der Lely N.V.**
**Weverskade 10**
**3155 PD Maasland (NL)**

(56) References cited:
**DE-A- 3 714 642**          **DE-A- 3 838 151**

**Description**

The invention relates to an implement for spreading material, having a frame, a hopper, a dosing member, as well as an electronic measuring device comprising a weight measuring unit for determining at least the weight of the material present in the hopper, the electronic measuring device furthermore being provided with measured weight correction means, including a correction factor determining sensor, with which the weight determined by the weight measuring unit is corrected such that, independently of the angle at which the implement is located relative to a reference plane, preferably a horizontal plane, the actual weight of at least the material present in the hopper is determined.

Such an implement is disclosed in the European patent application 0 407 705.

The invention has for its object to provide a simple, cheap and reliable correction factor determining sensor. To that end, according to the invention, the correction factor determining sensor is constituted by a weight pressure cell on which a reference weight is present.

The reference weight includes a member having a weight known per se which in a true horizontal position is recorded by the weight pressure cell. If the weight pressure cell is shifted through a certain angle relative to the reference plane, then the inverse value of the weight determined by the weight pressure cell supplies the correction factor by which the weight determined by the weight measuring unit must be corrected.

In accordance with a further feature of the invention, bulk flow correction means are present, by means of which a corrected bulk flow is determined from a desired bulk flow and from the control signal for the control of the dosing member. In a typical embodiment, this control signal is a bulk flow correction signal produced by bulk flow adjusting means connected to the electronic measuring device. In accordance with a further feature of the invention, these bulk flow adjusting means comprise first summing means which are provided with a memory for storing as a starting weight that weight that was determined last before the supply of the bulk flow correction signal by the electronic measuring device, and also means for always determining the difference between the weight stored in the memory and the actual weight determined by the electronic measuring device, whilst further second summing means are present to determine from the desired bulk flow a desired value of the weight of material to be spread over a period of time corresponding to the period of time to which the difference determination in the first summing means relates, whereas the bulk flow adjusting means further include correction factor determining means to determine from the value supplied by the summing means the bulk flow correction signal.

In accordance with a further feature of the invention, the bulk flow correction signal determined in the correction factor determining means is derived by multiplying the quotient of the values supplied by the first and second summing means by the value determined last of the bulk flow correction signal.

In accordance with a still further feature of the invention, the bulk flow adjusting means include a condition function, by means of which, depending on the difference between the values supplied by the first and second summing means, the correction factor determining means are enabled for calculating a new correction factor. In a typical embodiment, the condition function includes a threshold value for the magnitude of the difference, whilst herein a maximum value is further included for the frequency of the bulk flow correction signal. A new bulk flow correction signal is determined in the correction factor determining means, which is applied to the bulk flow correction means. In accordance with a still further feature of the invention, a micro-processor is present, which performs the function of the bulk flow adjusting means and the computing means.

A further object of the invention is a measuring device with high accuracy in difficult circumstances. To that end, the electronic measuring device is provided with measured weight correction means, with which the weight determined by the weight measuring unit is corrected such that, independently of the angle at which the implement is located relative to a reference plane and/or independently of the acceleration components to which the implement is subjected, the actual weight of at least the material present in the hopper is determined. Thus it is possible, for example during spreading of the material on slopes or banks, to determine the actual weight of the material present in the hopper. The horizontal plane is preferably used as the reference plane.

In accordance with a further feature of the invention, a correction factor is determined by an angular shift of the weight measuring unit about a shaft in the direction of operative travel of this measuring unit and relative to a first reference line in a vertical plane perpendicular to the direction of operative travel. In this manner it becomes possible to determine with the aid of the weight measuring unit the actual weight in, for example, those situations in which the implement is moved transversely to a slope or in which, during edge spreading, the implement together with the weight measuring unit is in an inclined position.

In accordance with yet another feature of the invention, a correction factor is determined by an angular shaft of the weight measuring unit about a shaft perpendicular to a vertical plane in the direction of operative travel of this measuring unit and relative to a second reference line. This enables a determination of the actual weight of at least the material present in the hopper when, for example, the implement is driven up or down a slope. The first and second reference lines then form the said, preferably horizontal, reference plane.

In accordance with a still further feature of the invention, the measured weight correction means comprise a correction factor determining sensor.

In a further embodiment, the measured weight correction means include a clinometer. This clinometer preferable operates with two shafts.

In accordance with a feature of the invention, the measured weight correction means include a filter and correction unit, by means of which the signal produced by the weight measuring unit and the correction factor determining sensor is filtered and by means of which the signals supplied by the weight measuring unit are corrected by the signal supplied by the correction factor determining sensor. Unwanted signals can, for example, be produced by vibrations of a power take-off shaft, voltage sources, cables etc. So as to filter out such signals, a low-frequency bandpass filter with adjustable band width is used in a specific embodiment. This renders it possible to choose, for example during filling of the hopper, a fast filter, whilst during travel over a field a slow filter can be chosen.

In accordance with a further feature of the invention, the filter and correction unit comprises computing means. The computing means includes a mathematical function, with the aid of which the signal supplied and filtered by the weight measuring unit is corrected by the signal supplied and filtered by the correction factor determining sensor. In accordance with a further feature of the invention, the electronic measuring device supplies a control signal, from which control signal, at least in the stationary state of the implement, a weight can be derived that can be displayed on the screen of a display device.

In a particular embodiment in accordance with the invention, the measured weight correction means include an acceleration meter connected to the electronic measuring device, with the aid of which the acceleration components to which the weight measuring unit is subjected are determined, the output signal of this acceleration meter being conveyed to a micro-processor, so as to render it possible to correct the weight determined by the weight measuring unit for unwanted acceleration components. In accordance with a further feature of the invention, a first acceleration meter is present, by means of which the acceleration components in the direction of operative travel are determined. In this manner it is possible to determine, with the first acceleration meter, the actual weight of at least the material present in the hopper during, for example, acceleration or braking down of the implement.

In accordance with yet another feature of the invention, a second acceleration meter is present, with which the acceleration components in a direction transversely to the direction of travel can be determined. The second acceleration meter enables the determination of the actual weight of at least the material present in the hopper, if, for example, the implement oscillates around a longitudinal axis in the direction of operative travel, due, for example, to an uneven field.

In accordance with a further feature of the invention, a third acceleration meter is present, by means of which the acceleration components perpendicular to a horizontal plane are determined. The third acceleration meter renders it possible to determine the actual weight of at least the material present in the hopper when, for example, the implement is moved up or down on the field due to an unevenness. In a preferred embodiment in accordance with the invention, the weight measuring unit is attached to a trestle having coupling points, by means of which the implement can be coupled to a tractor. In accordance with a feature of the invention, the trestle is formed by two telescoping parts, the first part of which comprises the coupling points by means of which the first part of the trestle is hitched to the tractor, whilst the second part comprises the coupling points to which coupling points of the implement are couplable. In accordance with a further feature of the invention, the first and second parts of the trestle are located before a plane through the coupling points, by means of which the trestle is connected to the lifting hitch of the tractor. As a consequence thereof, the tractor is in a position close behind the tractor, which is advantageous for the position of the centre of gravity of the implement relative to the tractor.

In accordance with another feature of the invention, the weight measuring unit is arranged between the first and second parts of the trestle. In this manner, one weight measuring unit is sufficient to determine the weight of the implement.

In accordance with a feature of the invention, the trestle is Λ-shaped. At the ends of the Λ-shaped trestle parts and at the upper end of the Λ-shaped trestle parts there are provided, in accordance with a further feature of the invention, leaf springs between the two trestle parts, which can counteract a shift of the trestle parts in a horizontal plane relative to each other. The leaf springs provide that only vertical forces can be exercised on the weight measuring unit.

For a better understanding of the invention and to show how the same may be carried into effect, the invention will now be described in greater detail with reference to the accompanying drawings, in which:

Figure 1 is a side view of an implement for spreading material, comprising an electronic measuring device with which the actual weight of at least the material present in the hopper can be determined;

Figure 2 shows, to an enlarged scale, a portion of the implement shown in Figure 1, taken on the line II-II therein;

Figure 3 shows, to an enlarged scale, a portion of the implement of Figure 1, taken on the line III-III therein;

Figure 4 is, to an enlarged scale, a plan view of a portion of the implement of Figure 1, taken in the direction of the arrow IV therein;

Figure 5 is a cross-sectional view of an enlarged detail of the implement taken on the line V-V in Figure 2;
Figure 6 shows schematically, in a side view, an implement in accordance with the invention on a slope;
Figure 7 shows schematically, in a rear view, an implement according to the invention on a slope;
Figure 8 shows schematically, in a side view, a further embodiment according to the invention of an implement on a slope;
Figure 9 shows schematically, in a side view, a still further embodiment according to the invention;
Figure 10 is a schematic view of an electronic measuring and control system in accordance with the invention.

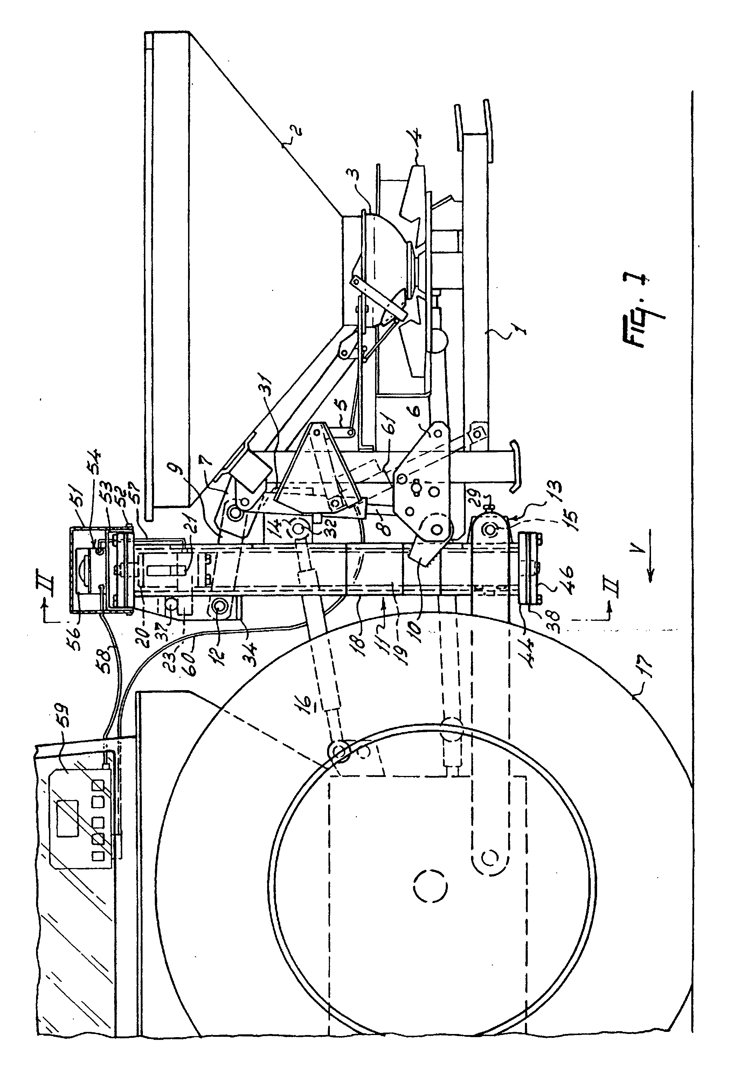

In an embodiment as shown in Figure 1, an implement in accordance with the invention is shown as a spreader implement, which is drivable during operation and which is more specifically used for spreading material over agricultural lands. The implement has a frame 1, on which a storage bin or hopper 2 is disposed. At its bottom side, the hopper 2 is provided with a dosing member 3 under which there is a spreader member 4. The dosing member 3 can be adjusted with the aid of an adjusting mechanism 5. In addition, the frame 1 includes strips 6, 7 which are provided with bores and can act as coupling points. For the purpose of edge spreading, the implement further includes a cylinder 8 which . can be operated hydraulically and by means of which the implement can be tilted about an axis in the direction of operative travel V.

The frame 1 is coupled to an intermediate trestle 11 by means of coupling members 9, 10. The coupling member 9 has one end connected to the strip 7 and the other end to coupling point 12. The two coupling members 10 are located at the rear side of the intermediate trestle 11 and comprise strips 10A which are connected to the legs of the intermediate trestle 11. The two coupling members 10 are connected by means of one end to strips 6 and by means of the other end to the two coupling members 13 of the intermediate trestle 11. The intermediate trestle 11 is provided at its rear side with coupling members 14 and 15, by means of which the implement is couplable to a lifting hitch 16 of a tractor 17 or a suchlike vehicle. In view of the fact that the implement is inclined and as a consequence thereof is rotated relative to the intermediate trestle 11, the coupling members are constituted by ball couplings. In order to facilitate coupling and uncoupling of the intermediate trestle 11 to/from the tractor 17 and the frame 1, the intermediate trestle is provided at its upper end with two hooks 21, by means of which the intermediate trestle 11 can be lifted.

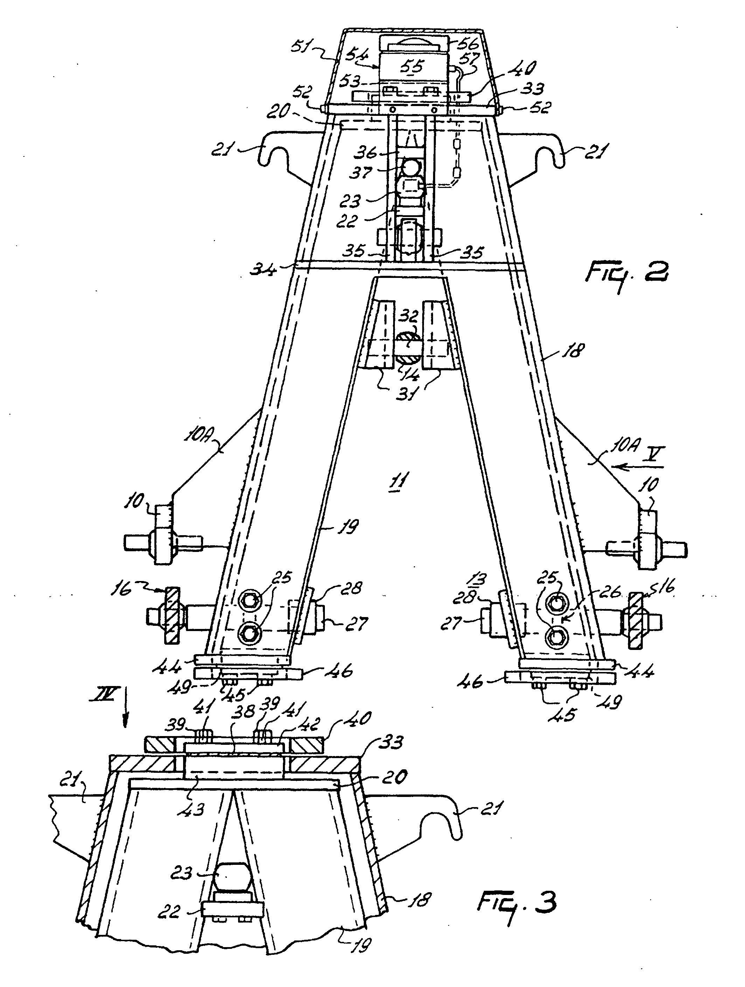

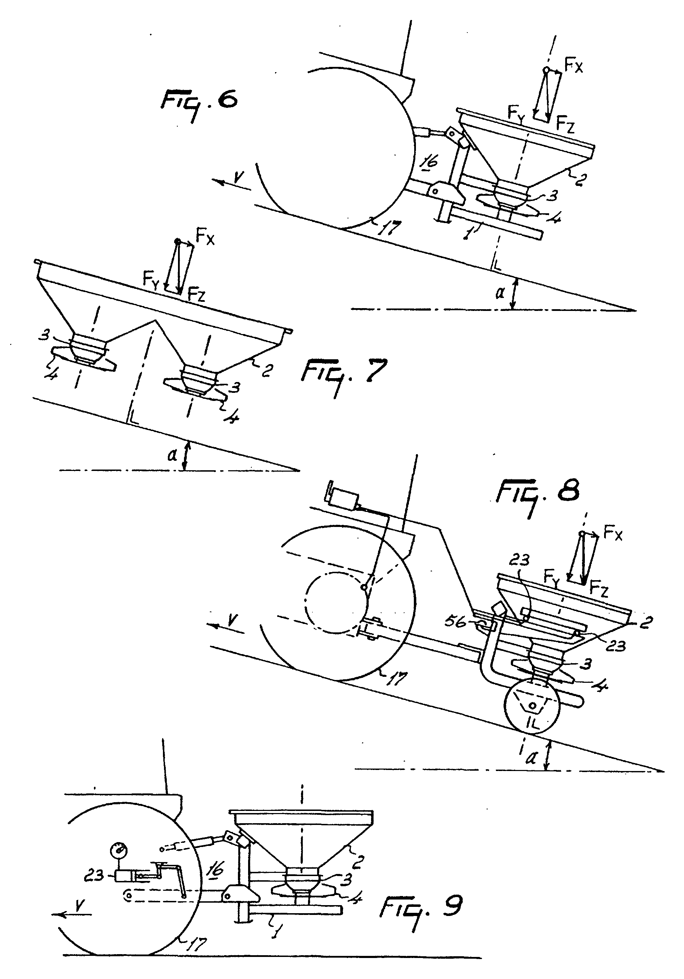

As is shown in Figure 2, the intermediate trestle 11 has an outer trestle 18 and an inner trestle 19. The inner trestle 19 is Λ-shaped and made, for example, of tubular material. At the base of the Λ-shaped inner trestle there is a strip 20 which interconnects the two legs 19 of the Λ-shape, as well as a strip 22 between the two legs 19 (Figure 3). A weight measuring unit 23 is positioned on the strip 22. The weight measuring unit 23 may, for example, be a strain gauge or load cell, which are known per se. Alternatively, the weight measuring unit 23 may consist, as is shown in Figure 8, of a plurality of weighing boxes 23, which support, for example, the hopper of a tractor-drawn spreader. In a still further embodiment, as shown in Figure 9, the weight measuring unit 23 is constituted by a pressure meter, which measures the pressure transferred via the arms of the lifting hitch 16 of the tractor 17 into the hydraulic system of the lifting hitch 16, in dependence on the weight of the implement.

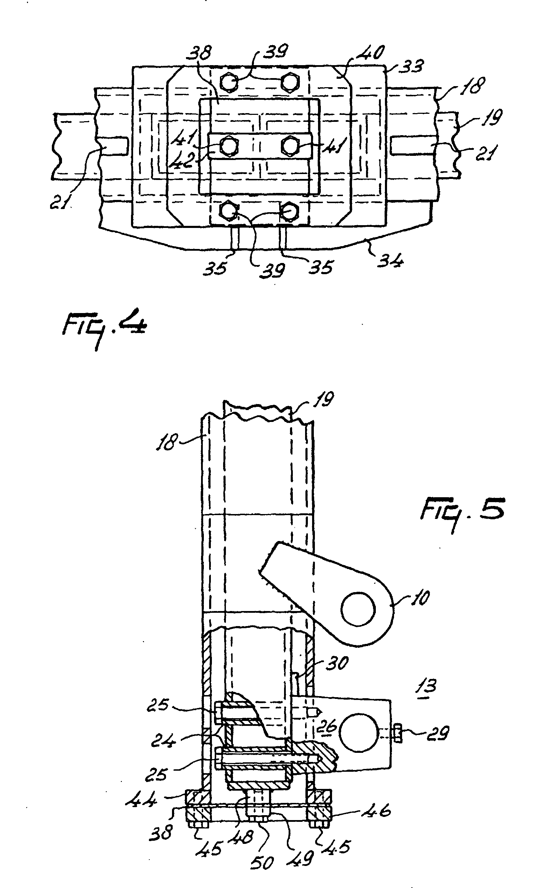

As is shown in Figure 5, the two coupling members 10 are attached to the inner trestle 19. The tubular profile 19 is provided with guide bushings 25, through each of which a bolt 25 is passed, by means of which the block 26 can be pulled tight against the tubular beam 19. The block 26 has a bore through which a pin 27 has been inserted and to which the arms 15 of the lifting hitch 16 of the tractor 17 can be coupled. The pin 27 is further passed through a guide bushing 28 (Figure 2) which is welded to the inner trestle 19. The pin 27 is locked against shifting in the block 26 and in the guide bushing 28 by a bolt 29 screwed into the block 26. The block 26 can be removed by loosening the bolts 25 and removal of the pin 27. In order to facilitate the application of the block 26 against the inner trestle 19, a strip-like stop 30 is attached to the inner trestle 19.

As is shown in Figure 2, the coupling point 14 includes two folded-over strips 31, which are each attached to a leg of the inner trestle 19. The strips 31 are provided with a bore, through which a pin 32 can be inserted. The top rod of the lifting hitch 16 can be attached to the pin 32.

The outer trestle is made from a U-shaped profile and bears against the inner trestle 19. The two U-shaped legs of the outer trestle 18 are interconnected near the base of the Λ-shape by a framework-like plate 33. A horizontal strip 34 interconnecting the legs of the outer trestle 18 is arranged near the coupling member 14. Between the framework-like plate 33 and the horizontal strip 34 there are disposed, at the leading side of the trestle and near the midway point, two vertical strips 35. The strips 35 are spaced apart in such .a manner that the weight measuring unit 23 fits therebetween. At a short distance above the weight measuring unit 23 there is disposed between the strips 35 a horizontal strip 36 which retains a ball 37 between the weight measuring unit 23 and the strip 36 itself. The ball 37 provides that the forces of the outer trestle 18 are adequately transferred to the weight measuring unit 23 (concentrated or point load). So as to realise a purest possible vertical load on the weight measuring unit 23, horizontal leaf springs are positioned between the outer trestle 18 and the inner trestle 19. Figures 3 and 4 illustrate how the uppermost leaf spring 38 is applied. The leaf spring 38 is clamped by means of bolts 39 between the framework-like plates 33 and 40. Moreover, the leaf spring 38 is clamped-in near the midway point by bolts 41, which draw small blocks 42 and 43 tightly against each other. The block 43 is disposed on the strip 20 of the inner trestle. The framework-like plates 33 and 40 are provided with an aperture in which the blocks 42 and 43 are accommodated, together with the leaf spring 38. At the bottom side of the intermediate trestle 11, a leaf spring 38 is disposed in a similar manner at each of the legs of the intermediate trestle 11 (Figure 5). At the bottom side of the U-shaped profile of the outer trestle 18, a U-shaped strip 44 is provided, against which a framework-like plate 46 can be bolted by means of bolts 45. The leaf spring 38 is retained between the U-shaped strip 44 and the framework-like plate 46. Near its midway point, the leaf spring 38 is also retained by the blocks 48 and 49, which are drawn tightly to each other by means of bolts 50. The block 48 is mounted on a plate disposed at the bottom side of the tubular profile of the inner trestle 19. The thickness of the leaf springs 38 has been chosen such that it hardly influences the vertical motions of the inner trestle 19 relative to the outer trestle 18 and vice versa, whereas it counteracts a motion in the horizontal direction of the inner trestle 19 and the outer trestle 18. The leaf springs 38 may be formed from a plurality of thin, stacked leaf springs, or be constituted by one single leaf spring.

At the upper side of the intermediate trestle 11 there is present, as is shown in Figures 1 and 2, a plate iron box-like element 51. The box-like element 51 is bolted by bolts 52 to the framework-like plate 33. Disposed inside the box-like element 51 is a U-shaped plate 53 which is also bolted to the framework-like plate 33 by bolts 52. The U-shaped plate 53 is located at a slight distance above the bolts 39 and acts as a base plate for the required electronics 54, inter alia a microprocessor 55 and measured weight correction means 56.

The weight measuring unit 23 is connected by means of an electric cord 57 with plug connection to the microprocessor 55. In addition, the microprocessor 55 is connected by means of a further electric cord 58 with plug connection to a board computer 59 in the tractor 17 (or a suchlike vehicle). By means of an electric cord 60 with plug connection the board computer is connected to an adjusting member 61. The adjusting member 61 is controllable by means of the board computer 59 and has one side connected to the frame 1 and the other side to the adjusting mechanism 5. The adjusting member 61 may be in the form of an electrically or hydraulically controlled cylinder.

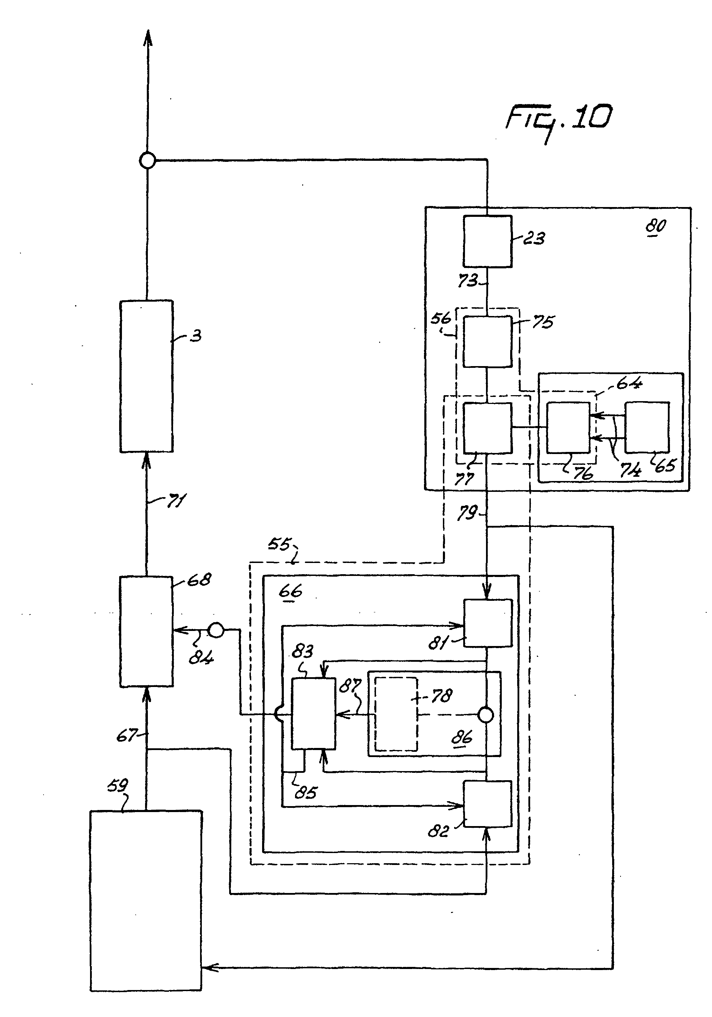

Figure 10 is a circuit diagram of an electronic measuring and control system, in which the above-mentioned components 3, 23, 55, 56, 59 are shown. The system operates as follows: for the assumed case in which fertilizer is to be spread, the board computer 59 supplies a desired bulk flow (kg/s) on the basis of the desired dose (kg/m2), working width (m) and rate of travel (M/s) via the line 67. With the aid of a (non-shown) dose adjusting table, a control signal can be derived from the desired bulk flow for setting the dosing member 3. The value, supplied by the board computer 59, of the desired bulk flow can subsequently be corrected in the bulk flow correction means 68, when, for example, a test run proves that a correction factor is to be applied to the desired bulk flow, so as to have this flow actually leave the hopper 2. On the basis of the correction factor thus supplied via the line 71, the adjusting member 61 of the dosing member 3 is preset in the embodiment in accordance with the invention.

In this manner, a number of kg of material will flow per unit of time from the hopper via the dosing member 3. The weight measuring unit 23, in this case constituted by a weighing cell, measures how many kilogrammes are present in the hopper 2 at a given instant. To that end, the weight measuring unit 23 supplies over the line 73 a signal designating this weight, which signal is thereafter applied to measured weight correction means 56. The measured weight correction means 56 include a filter and correction unit 64 and a correction factor determining sensor 65. On the one hand, using the filter and correction unit 64 the signal supplied by the weight measuring unit 23 (weighing cell) via the line is filtered, and on the other hand the signals supplied via the line 74 by the correction factor determining sensor 65. In the embodiment of Figure 10, the correction factor determining sensor 65 is a clinometer or angle measuring cell, whose output signals, decomposed in two mutually perpendicular components, are supplied via the line 74. Consequently, the angle measuring cell is bidirectionally sensitive. During operation of the implement, disturbances occur due to, for example, oscillations of the power take-off shaft, shocks due to driving over uneven land, etc. So as to reduce these disturbances to a minimum, filters 75 and 76 are employed. The filters 75 and 76 are in the form of low-frequency bandpass filters. The filter 75, which filters the signal supplied by the weight measuring unit 23, is a filter having an adjustable bandwidth, which adjustment can, for example, be effected manually or from the microprocessor 55. In practice, a filter 75 having a large bandwidth is chosen when the hopper 2 is being filled, as such a filter entails a relatively short time delay and the weight to be measured of the hopper 2 with contents can therefore be read almost immediately. During travel over a plot of land, unwanted frequencies are produced by, for example, unevennesses in the land. Since these frequencies are very annoying for an adequate weight determination, it is desirable to filter them off to the best possible extent. To achieve this, the bandpass response of the filter 75 is limited during travel of the field, whereby an increasing filtration of high frequency components in the signal supplied by the weight measuring unit 23 is obtained. The filter and correction unit 64 also comprises computing means 77, in which the signal supplied by the filter of the weight measuring unit 23 is corrected. This correction is effected with the aid of the signals supplied by the correction factor determining sensor 65 via the filter 76. The manner in which the correction proper is realised, will be described in greater detail hereinafter.

The measured weight correction means 56 and the weight measuring unit 23 together form an electronic measuring device 80, by which over a line 79 the corrected instantaneous weight is conveyed to the board computer 59, in which it can be displayed on the screen of a display device and/or be stored in a memory.

Moreover, in the microprocessor 55 the corrected instantaneous weight is applied via a line 79 to bulk flow adjusting means 66. Using the bulk flow adjusting means 66, it is determined whether the value determined at consecutive instants of the corrected instantaneous weight corresponds to the value of desired bulk flow also applied to the bulk flow adjusting means 66. For the determination of the said values, the bulk flow adjusting means 66 comprise first summing means 81 and second summing means 82. The first summing means 81 include a memory in which an initial weight determined by the electronic measuring device 80 is stored. The first summing means 81 further include means for always determining the difference between the initial weight and the actual weight determined by the measuring device 80. In the table shown here, a numerical example is given of the values $\Sigma(\Delta M)_{CALC}$ (column 3) supplied by the first summing means 81 at an initial weight of 1000 kgs (column 2). On the basis of the values $\Sigma(\Delta M)_{DES}$ supplied by the summing means 82 the quantity of kgs of material spread at a given instant can be determined; it can, for example, be read in the table that at the instant t = 1 5kgs of material have been spread and 11 kgs at the instant t = 2, etc.

| Time | Values applied to means 81 by electronic measuring device 80 | Value supplied by means 81 $\Sigma(\Delta M)_{CALC}$ | Value supplied by means 82 $\Sigma(\Delta M)_{DES}$ | Difference $\|\Sigma(\Delta M)_{CALC} \Sigma(\Delta M)_{DES}\|$ |
|---|---|---|---|---|
| t=0 | 1000* | | | |
| 1 | 995 | 5 | 5 | 0 |
| 2 | 989 | 11 | 10 | 1 |
| 3 | 982* | 18 | 15 | 3** |
| 4 | 978 | 4 | 5 | 1 |
| 5 | 973 | 9 | 10 | 1 |
| 6 | 967 | 15 | 15 | 0 |
| 7 | 965* | 17 | 20 | 3** |
| 8 | 957 | 28 | 28 | 0 |

\* to memory in 81

\*\* exceeds threshold value (= 2 kgs)

By means of the second summing means 82 mentioned hereinbefore, the desired value $\Sigma(\Delta M)_{DES}$ of the weight of material to be spread per time interval is determined on the basis of the desired bulk flow, in correspondence with the time interval between a difference determination in the first summing means 81. In the numerical example of the table, the desired weight $\Sigma(\Delta M)_{DES}$ to be spread is 5 kgs in the interval between t = 0 and t = 1 and 10 kgs between t = and t = 2.

In addition, the bulk flow adjusting means 66 include correction factor determining means 83, to which the value $\Sigma(\Delta M)_{CALC}$ and $\Sigma(\Delta M)_{DES}$ are applied and with the aid of which a bulk flow correction signal can be determined which is applied via line 84 to the bulk flow correction means 68, which can correct the desired bulk flow with this signal. The bulk flow correction signal is determined with the aid of a function associated with the correction factor determining means 83, with which each time $\frac{\Sigma(\Delta M)_{DES}}{\Sigma(\Delta M)_{CALC}} \cdot f_A$ $f_A$ = instantaneous correction factor (wherein $f_A$ = 1 at t = 0) is calculated. In order to prevent that the bulk flow correction signals are conveyed to the bulk flow correction means at too high a rate and consequently there is risk of an unstable control, it is previously determined that the bulk flow correction signals are supplied at a rate which does not exceed a maximum value. To that end, a condition function 86 is incorporated in the bulk flow adjusting means 66. Using this condition function 86, it is determined whether the difference between $\Sigma(\Delta M)_{CALC}$ and $\Sigma(\Delta M)_{DES}$ is sufficiently large to proceed to the readjustment of the desired bulk flow. In the condition function 86 the value of the difference between $\Sigma(\Delta M)_{CALC}$ and $\Sigma(\Delta M)_{DES}$ is compared to a previously incorporated threshold value 78 for readjustment of the desired bulk flow. Reverting to the numerical example of the table, this threshold 78 value may be set at 2 kgs. From column 5 of the table it can be derived that up to and inclusive of the instant t = 2 the difference between $\Sigma(\Delta M)_{CALC}$ and $\Sigma(\Delta M)_{DES}$ does not exceed this threshold value 78, so in spite of the fact that there is a difference between the desired and the actual value, no bulk flow correction signal is supplied, so that no readjustment is effected. Not until the instant t = 3 the value of the difference between $\Sigma(\Delta M)_{CALC}$ and $\Sigma(\Delta M)_{DES}$ exceeds the threshold value 78 and a signal is applied with the aid of the condition function via a line 87 to the correction factor determining unit 83, which subsequent thereto applies a bulk flow correction signal to the bulk flow correction means 68. At that instant a readjustment of the desired bulk flow is a fact. After the bulk flow correction signal has been outputted, the correction factor determining means 83 apply, via a line 85 a reset signal to the first summing means 81 and to the second summing means 82, whereafter these means start again at the same instant with a determination of a new sequence of values of $\Sigma(\Delta M)_{CALC}$ and $\Sigma(\Delta M)_{DES}$. After the reset signal the old initial weight will be erased from the memory of the first summing means 81, and the memory is filled with the actual value of the weight determined by the weight measuring unit 23; in this way, at the instant t = 3, the value 982 is entered into in the numerical example in the memory, whilst 1000 is erased from the memory (see column 1), whereafter the procedure described in the foregoing starts again from the beginning.

The mode of operation of the above-described implement according to the invention will now be described in greater detail with reference to Figures 6 to 9.

As has already been said earlier in the description, it is possible to determine, using the intermediate trestle 11, at least the weight of the material present in the hopper 2. For that purpose a vertically directed concentrated load is exerted by the outer trestle 18 on weight measuring unit 23, which load results from the weight of the outer trestle 18 and the weight of the implement coupled to the coupling points 10 and 12. A limiting condition for a correct measurement of such a concentrated load is that during the measuring operation the weight measuring unit 23 must be in a horizontal position. If the weight measuring unit 23 deviates from the horizontal, for example when the unit moves in a direction up or transverse to a slope, then the weight measuring unit 23 will not measure the actual weight of the implement, which weight is designated in Figures 6 to 8 by the component $F_z$, but then the weight measuring unit 23 will determine the component $F_y$, as in this case the weight measuring unit 23 is located at an angle of inclination ($\alpha$) and the weight measuring unit 23 is in that case only capable of determining the component $F_y$ perpendicular to the surface. So as to derive the actual weight of the hopper, the component $F_z$ should be determined from the component $F_y$. The component $F_z$ is therefore calculated by means of the computing means 75 from the angle of inclination($\alpha$) determined by the measuring cell, and the component $F_y$ measured;

$$F_z = \frac{F_y}{\cos \alpha}$$

Once the component $F_z$ has been calculated, then on the basis of this value, it can be determined in the manner described hereabove whether a readjustment of the desired bulk flow is required.

**Claims**

1. An implement for spreading material, having a frame (1), a hopper (2), a dosing member (3), as well as an electronic measuring device (80) comprising a weight measuring unit (23) for determining at least the weight of the material present in the hopper (2), the electronic measuring device (80) furthermore being provided with measured weight correction means (56), including a correction factor determining sensor (65), with which the weight determined by the weight measuring unit (23) is corrected such that, independently of the angle at which the implement is located relative to a reference plane, preferably a horizontal plane, the actual weight of at least the material present in the hopper (2) is determined, **characterized in that** the correction factor determining sensor (65) is constituted by a weight pressure cell on which a reference weight is present.

2. An implement as claimed in claim 1, **characterized in that** bulk flow correction means are present, by means of which a corrected bulk flow is determined from a desired bulk flow and from the dosing member control signal.

3. An implement as claimed in claim 1 or 2, **characterized in that** the control signal is a bulk flow correction signal produced by bulk flow adjusting means connected to the electronic measuring device.

4. An implement as claimed in claim 3, **characterized in that** the bulk flow adjusting means comprise first summing means which are provided with a memory for storing as a starting weight that weight that was determined last before the supply of the bulk flow correction signal by the electronic measuring device, and also means to always determine the difference between the weight stored in the memory and the actual weight determined by the electronic measuring device, whilst furthermore second summing mean are present to determine from the desired bulk flow a desired value of the weight of material to be spread over a period of time corresponding to the period of time to which the difference determination in the first summing means relates, whereas the bulk flow adjusting means further include correction factor determining means to determine the bulk flow correction signal from the values supplied by the summing means.

5. An implement as claimed in claim 4, **characterized in that** in the correction factor determining means the bulk flow correction signal is derived by multiplying the quotient of the values, supplied by the first and second summing means by the value determined last of the bulk flow correction signal.

6. An implement as claimed in any one of claims 3 to 5, **characterized in that** the bulk flow adjusting means include a condition function by means of which, depending on the difference between the values supplied by the first and second summing means, the correction factor determining means are enabled for calculating a new correction factor.

7. An implement as claimed in claim 6, **characterized in that** the condition function incorporates a threshold value for the magnitude of the difference.

8. An implement as claimed in claim 6 or 7,
**characterized in that** the condition function incorporates a maximum value for the frequency of the bulk flow correction signal.

**Patentansprüche**

1. Vorrichtung zum Streuen von Gut mit einem Rahmen (1), einem Vorratsbehälter (2), einem Dosierer (3) sowie einer elektronischen Meßvorrichtung (80), die eine Gewichtsmeßeinheit (23) aufweist, um zumindest das Gewicht des in dem Vorratsbehälter (2) befindlichen Gutes zu ermitteln, wobei die elektronische Meßvorrichtung (80) ferner eine Vorrichtung (56) zur Korrektur des gemessenen Gewichtes mit einem Korrekturfaktor-Ermittlungssensor (65) aufweist, mit dessen Hilfe das von der Gewichtsmeßeinheit (23) ermittelte Gewicht derart korrigiert wird, daß das tatsächliche Gewicht zumindest des in dem Vorratsbehälter (2) befindlichen Gutes unabhängig von dem Winkel ermittelt wird, in dem die Vorrichtung relativ zu einer Bezugsebene, vorzugsweise einer horizontalen Ebene, angeordnet ist, **dadurch gekennzeichnet, daß** der Korrekturfaktor-Ermittlungssensor (65) durch eine Druckmeßdose gebildet ist, auf der sich ein Referenzgewicht befindet.

2. Vorrichtung nach Anspruch 1,
**dadurch gekennzeichnet, daß** eine Vorrichtung zur Korrektur des Gutstromes vorhanden ist, mittels der anhand eines gewünschten Gutstromes und des Steuersignals des Dosierers ein korrigierter Gutstrom ermittelt wird.

3. Vorrichtung nach Anspruch 1 oder 2,
**dadurch gekennzeichnet, daß** das Steuersignal ein Gutstrom-Korrektursignal ist, das von einer mit der elektronischen Meßvorrichtung verbundenen Vorrichtung zur Einstellung des Gutstromes erzeugt wird.

4. Vorrichtung nach Anspruch 3,
**dadurch gekennzeichnet, daß** die Vorrichtung zur Einstellung des Gutstromes eine erste Summiervorrichtung mit einem Speicher aufweist, in dem als Ausgangsgewicht dasjenige Gewicht gespeichert wird, das vor Abgabe des Gutstrom-Korrektursignals durch die elektronische Meßvorrichtung zuletzt gemessen wurde, und außerdem mit einer Vorrichtung zum ständigen Bestimmen der Differenz zwischen dem in dem Speicher gespeicherten Gewicht und dem tatsächlichen Gewicht, das von der elektronischen Meßvorrichtung gemessen wird, wobei ferner eine zweite Summiervorrichtung vorhanden ist, um anhand des gewünschten Gutstromes einen gewünschten Gewichtswert des Gutes zu ermitteln, das während eines Zeitraumes auszustreuen ist, der dem Zeitraum entspricht, auf den sich die Differenzermittlung in der ersten Summiervorrichtung bezieht, wobei die Vorrichtung zur Einstellung des Gutstromes ferner eine Vorrichtung zur Ermittlung des Korrekturfaktors aufweist, um anhand der von den Summiervorrichtungen gelieferten werte das Gutstrom-Korrektursignal zu ermitteln.

5. Vorrichtung nach Anspruch 4,
**dadurch gekennzeichnet, daß** in der Vorrichtung zur Ermittlung des Korrekturfaktors das Gutstrom-Korrektursignal dadurch abgeleitet wird, daß der Quotient der von der ersten und der zweiten Summiervorrichtung gelieferten Werte mit dem zuletzt ermittelten wert des Gutstrom-Korrektursignals multipliziert wird.

6. Vorrichtung nach einem der Ansprüche 3 bis 5,
**dadurch gekennzeichnet, daß** die Vorrichtung zur Einstellung des Gutstromes eine Bedingungs-Funktion aufweist, mittels der in Abhängigkeit von der Differenz zwischen den von der ersten und der zweiten Summiervorrichtung gelieferten Werten von der Vorrichtung zur Ermittlung des Korrekturfaktors ein neuer Korrekturfaktor zu errechnen ist.

7. Vorrichtung nach Anspruch 6,
**dadurch gekennzeichnet, daß** die Bedingungs-Funktion einen Grenzwert für den Betrag der Differenz aufweist.

**8.** Vorrichtung nach Anspruch 6 oder 7,
**dadurch gekennzeichnet, daß** die Bedingungs-Funktion einen Höchstwert für die Frequenz des Gutstrom-Korrektursignals aufweist.

**Revendications**

**1.** Outil pour épandre une matière, ayant un châssis (1), une trémie (2), un élément doseur (3), ainsi qu'un dispositif de mesure électronique (80) comprenant une unité de mesure de poids (23) pour déterminer au moins le poids de la matière présente dans la trémie (2), le dispositif de mesure électronique (80) étant en outre muni de moyens de correction de poids mesuré (56), comprenant un capteur de détermination de facteur de correction (65), avec lequel le poids déterminé par l'unité de mesure de poids (23) est corrigé de façon telle qu'indépendamment de l'angle avec lequel outil est situé relativement à un plan de référence, de préférence un plan horizontal, le poids véritable d'au moins la matière présente dans la trémie (2) soit déterminé, **caractérisé en ce que** le capteur de détermination de facteur de correction (65) est constitué d'une cellule de pression d u poids sur laquelle un poids de référence est présent.

**2.** Outil selon la revendication 1, **caractérisé en ce que** des moyens de correction de débit massique sont présents, au moyen desquels un débit massique corrigé est déterminé à partir d'un débit massique souhaité et à partir du signal de commande d'élément doseur.

**3.** Outil selon la revendication 1 ou 2, **caractérisé en ce que** le signal de commande est un signal de correction de débit massique produit par des moyens d'ajustement de débit massique connectés au dispositif de mesure électronique.

**4.** Outil selon la revendication 3, **caractérisé en ce que** les moyens d'ajustement de débit massique comprennent des premiers moyens d'addition qui sont munis d'une mémoire pour stocker comme poids de départ ce poids qui a été déterminé en dernier avant l'apport du signal de correction de débit massique par le dispositif de mesure électronique, et aussi des moyens pour déterminer toujours la différence entre le poids stocké dans la mémoire et le poids réel déterminé par le dispositif de mesure électronique, alors qu'en outre des seconds moyens d'addition sont présents pour déterminer à partir du débit massique souhaité une valeur souhaitée du poids de matière à épandre sur une période temps correspondant à la période de temps à laquelle la déterm ination de différence dans les premiers moyens d'addition est liée, alors que les moyens d'ajustement de débit massique comprennent en outre des moyens de détermination de facteur de correction pour déterminer le signal de correction de débit massique à partir des valeurs fournies par les moyens d'addition.

**5.** Outil selon la revendication 4, **caractérisé en ce que** dans les moyens de détermination de facteur de correction le signal de correction de débit massique est déduit en multipliant le quotient des valeurs, fournies par les premier et second moyens d'addition par la valeur déterminée lors du dernier signal de correction de débit massique.

**6.** Outil selon l'une quelconque des revendications 3 à 5, **caractérisé en ce que** les moyens d'ajustement de débit massique comprennent une fonction de condition au moyen de laquelle, en fonction de la différence entre les valeurs fournies par les premier et second moyens d'addition, les moyens de détermination de facteur de correction sont activés pour calculer un nouveau facteur de correction.

**7.** Outil selon la revendication 6, **caractérisé en ce que** la fonction de condition comprend une valeur de seuil pour l'amplitude de la différence.

**8.** Outil selon la revendication 6 ou 7, **caractérisé en ce que** la fonction de condition comprend une valeur maximale pour la fréquence du signal de correction de débit massique.

FIG. 1

EP 0 852 902 B1

FIG. 2

FIG. 3

Fig.4

Fig.5

FIG. 6

FIG. 7

FIG. 8

FIG. 9

FIG.10